# EUROPEAN PATENT SPECIFICATION

(11) **EP 1 767 444 B1**
(45) Date of publication and mention of the grant of the patent: **29.07.2009**
(21) Application number: 06016565.1
(22) Date of filing: 08.08.2006
(51) Int. Cl.: B62J 6/04

(54) **Vehicle body rear structure of saddle-ride type vehicle**
Heckteilaufbau eines Fahrzeuges mit Sattel
Structure de la partie arrière d'un véhicule du type à selle

(30) Priority: 26.09.2005 JP 2005278870
(43) Date of publication of application: 28.03.2007
(73) Proprietor: Honda Motor Co., Ltd., Minato-ku Tokyo 107-8556 (JP)
(72) Inventor: Katagiri, Kiyoshi, Wako-shi Saitama, 351-0193 (JP); Ito, Masamoto, Wako-shi Saitama, 351-0193 (JP); Ohashi, Hayato, Wako-shi Saitama, 351-0193 (JP)
(74) Representative: Rupp, Christian

(56) References cited:
- EP-A2- 1 352 819
- WO-A-03/035457
- DE-U1- 20 315 583
- FR-A1- 2 687 116

## Description

The present invention relates to the vehicle body rear structure of a saddle-ride type vehicle such as motorcycles shown in the prior art document EP 1 352 819.

The vehicle body rear structure provided with a rear grip integrated with a carrier for example over a tail lamp is disclosed (for example, refer to Patent Document 1) [Patent Document 1] JP-A No. 2005-88798

In a vehicle body rear structure in a related art, a lower surface of the carrier is irradiated by light of the tail lamp, however, as a suspended wall is formed on the periphery of the carrier, reflected light of the tail lamp on the lower surface of the carrier is obstructed by the wall and backward light distribution is limited. As irregularities are made by the formation of ribs on the lower surface of the carrier, light of the tail lamp is irregularly reflected and backward light distribution itself decreases. Light of the tail lamp is reflected at a lower edge of the wall, however, a plane of the reflection is approximately as thick as a plate making the wall and is not enough to distribute the light backward.
The invention is made in view of the above-mentioned situation and the object is to effectively utilize light of a tail lamp for irradiating a rear grip and to further enhance the visibility in the vehicle body rear structure of a saddle-ride type vehicle provided with the rear grip over the tail lamp.

For means for addressing the above-mentioned problem, the invention according to Claim 1 is based upon the vehicle body rear structure of a saddle-ride type vehicle (for example, a motorcycle 1 in an embodiment) provided with a tail lamp (for example, a tail lamp 52 in the embodiment) provided to the vehicle body rear portion and a rear grip (for example, a rear grip 61 in the embodiment) provided over the tail lamp, wherein the rear grip is provided with a flat portion (for example, a flat portion 65 in the embodiment) continuous on a lower surface (for example, a lower surface 64 in the embodiment) and a reflecting part (for example, a reflecting part 65a in the embodiment) opposite to the tail lamp for reflecting light from the tail lamp backward is provided to the flat portion. The saddle-ride type vehicle means the whole vehicle of a type that a rider strides over the body, includes not only a motorcycle but a three-wheeled or four-wheel vehicle, and also includes a scooter-type vehicle provided with a low slung footrest.

In the present invention according to Claim 2, a backward reflection inhibiting part (for example, a concave portion 66 in the embodiment) for inhibiting the backward reflection of light of the tail lamp is provided to a part close to the tail lamp of the rear grip.

According to the invention disclosed in Claim 1, as light reflected backward by the reflecting part over the tail lamp functions like light distribution by a high mounted stop lamp, the visibility of the tail lamp is further enhanced, a high mounted stop lamp is not required to be separately provided, and the cost of the vehicle body rear portion can be reduced.

According to the invention disclosed in Claim 2, as the backward reflection inhibiting part is arranged between the tail lamp and the reflecting part, direct light from the tail lamp and reflected light from the reflecting part are separated from each other and the visibility can be more enhanced.
Fig. 1 is a left side view showing a motorcycle in an embodiment of the invention.
Fig. 2 is a right side view showing the motorcycle.
Fig. 3 is a left side view showing the vehicle body rear portion of the motorcycle.
Fig. 4 is back view showing the vehicle body rear portion.
Fig. 5 is a top view showing the vehicle body rear portion.

Referring to the drawings, an embodiment of the invention will be described below. A position such as the front, the rear, the right and the left in the following description shall be the same as that in a vehicle unless it is particularly described. An arrow FR in the drawings denotes a forward direction of the vehicle, an arrow LH denotes a left side of the vehicle, and an arrow UP denotes the upside of the vehicle.

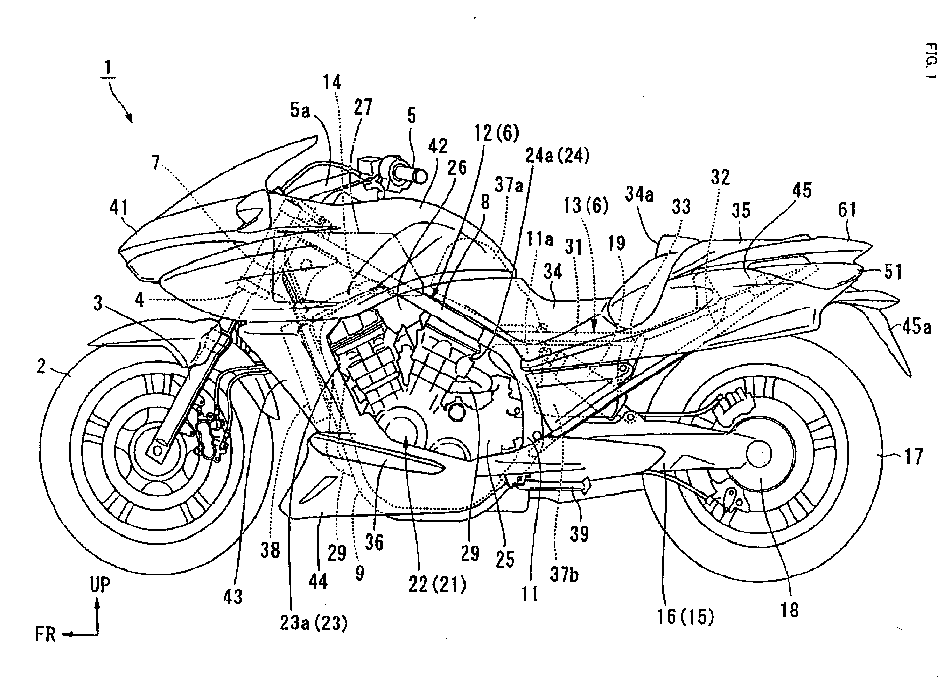

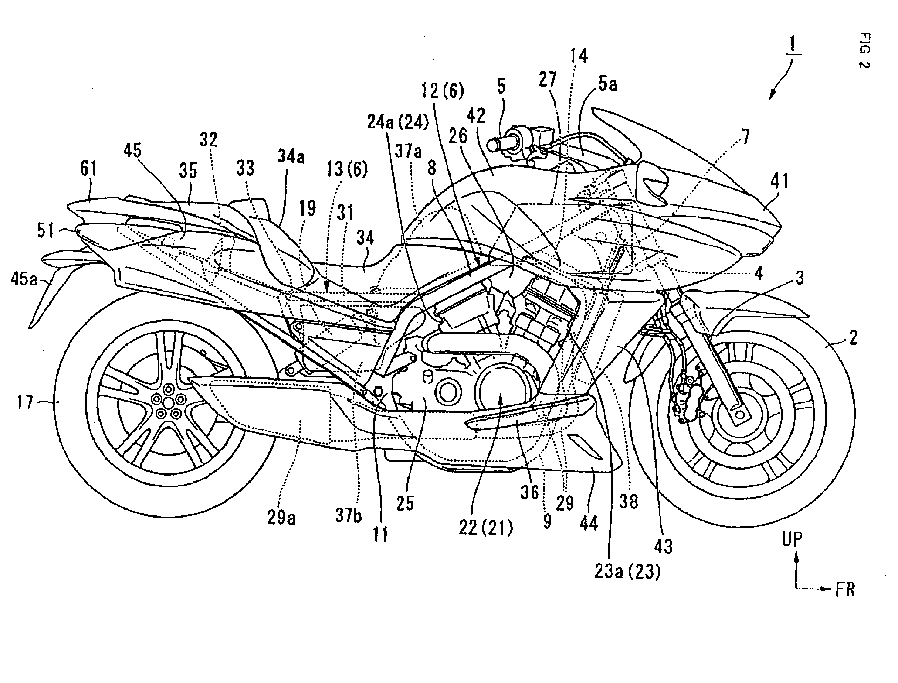

As shown in Figs. 1 and 2, a front wheel 2 of a motorcycle (a saddle-ride type vehicle) 1 is supported by lower ends of a pair of right and left front forks 3. The upside of each front fork 3 is pivotably supported by a head pipe 7 at the front end of a body frame 6 via a steering stem 4 so that each front fork can be steered. A handlebar 5 for steering the front wheel is attached to the upside of the steering stem 4 via a handlebar 5a. A pair of right and left main tubes 8 are extended diagonally downward and backward from the upside of the head pipe 7. A pair of right and left down tubes 9 are extended diagonally downward and backward in sharper inclination than the main tubes 8 from the downside of the head pipe 7. The fronts of the main tube 8 and the down tube 9 are connected via a gusset pipe 14 laid between the fronts.

Right and left asymmetrical pivot plates 11 are provided in an intermediate part in a longitudinal direction of the body frame 6. The left pivot plate 11 is vertically long, its upside is curved diagonally upward and forward, and the upside is connected to the rear end of the left main tube 8. In the meantime, the right pivot plate 11 is vertically short and the upside is connected to the rear end of the right main tube 8 extended to the right pivot plate. Rear ends of the right and left down tubes 9 are connected to the downsides of the right and left pivot plates 11. Hereby, a double cradle type main frame 12 is formed. The body frame 6 of the motorcycle 1 is formed mainly by the main frame 12 configured as described above and a seat frame 13 extended backward from the rear of the main frame 12.

The pivot plate 11 pivotably supports the front end of a swing arm 15 so that the swing arm can be swung. The swing arm 15 is a cantilever type one arm 16 set on the left side of the body off the front end (a base) of which is extended backward and which supports a rear wheel 17 at the rear end (an end) of the arm 16. The arm 16 is hollow and a drive shaft not shown is inserted into the inside. A final gear case 18 is located at the rear end of the arm 16, and the drive shaft and the rear wheel 17 are linked via a bevel gear in the final gear case 18. A rear cushion unit 19 is arranged between an intermediate part in a longitudinal direction of the arm 16 and a cushion supporting part 11a in an upper part of the left pivot plate 11.

An engine 21 provided with a crankshaft parallel to a direction of the width of the body (a lateral direction) is mounted inside the main frame 12. The engine 21 is a narrow angle V-type two-cylinder engine in which a forward inclined cylinder 23 and a backward inclined cylinder 24 are installed upright on a crankcase 22. A transmission case 25 ranges in the rear of the crankcase 22, and the drive shaft and the engine 21 are linked via a bevel gear in an output part on the left side of the transmission case 25. Hereby, the transmission of power between the engine 21 and the rear wheel 17 via the drive shaft is enabled.

A throttle body 26 corresponding to each cylinder 23, 24 is arranged between banks of both cylinders 23, 24. The downstream side of each throttle body 26 is connected to an intake port in the rear of a forward inclined cylinder head 23a or an intake port in the front of a backward inclined cylinder head 24a, and the upstream side of each throttle body 26 is connected to an air cleaner box 27 located on the upside of the forward inclined cylinder 23.

An exhaust pipe 29 is led out of each exhaust port in the front of the forward inclined cylinder head 23a and in the rear of the backward inclined cylinder head 24a. Each exhaust pipe 29 is turned to the right side of the engine 21 to be one pipe and is connected to a silencer 29a on the right side of the vehicle body rear portion after one pipe is extended backward. The silencer 29a is extended substantially in the longitudinal direction and is provided so that the silencer is substantially overlapped with the swing arm 15 when the silencer is viewed from the side of the body.

The seat frame 13 mainly includes right and left upper seat rails 31 extended backward from the upside of the rear of the main frame 12 and right and left lower seat rails 32 extended diagonally upward and backward from the downside of the rear of the main frame 12. The rear ends of each seat rail 31, 32 are confluent and are connected at the rear end of the body. Intermediate parts in a longitudinal direction of each seat rail 31, 32 are connected via a rear gusset pipe 33 laid between these.

A front seat 34 for a rider and a rear seat 35 for a pillion passenger are supported by the front and the rear of the seat frame 13. A seated position of the front seat 34 is set to a relatively low position and a backrest 34a is arranged in a part having difference in a level between the front seat 34 and the rear seat 35. Both sides of the front end of the front seat 34 are extended forward along an upper edge of the main tube 8. Step boards 36 for the rider are provided on both sides of the front of the body so that the step board crosses the crankcase 22 and the down tube 9 when the step board is viewed from the side of the body.

A fuel tank of the motorcycle 1 is divided into an upper fuel tank 37a located in front of the front seat 34 and a lower fuel tank 37b biased on the downside and on the right side of the front seat 34. The upper fuel tank 37a is arranged between both laps of the rider seated on the front seat 34 and the lower fuel tank 37b is arranged between the front of the upper seat rail 31 and the front of the lower seat rail 32. A reference numeral 38 denotes a radiator laid between front edges of the right and left down tubes 9 and 39 denotes a folding type side stand for supporting the body in a state in which the body is inclined on the left side.

A body cover mainly formed by parts made of resin is attached to the body of the motorcycle 1. The body cover mainly includes a front cowl 41 covering a range from a part in front of the head pipe 7 to both sides, a tank cover 42 ranging at the back of the front cowl 41 and covering the air cleaner box 27 and the upper fuel tank 37a, front side covers 43 extended downward from both lower parts of the front cowl 41 and covering the down tube 9 and the radiator 38, an under cover 44 covering a lower part of the engine 21, the exhaust pipe 29 and the silencer 29a and rear side covers 45 covering both sides of the vehicle body rear portion.

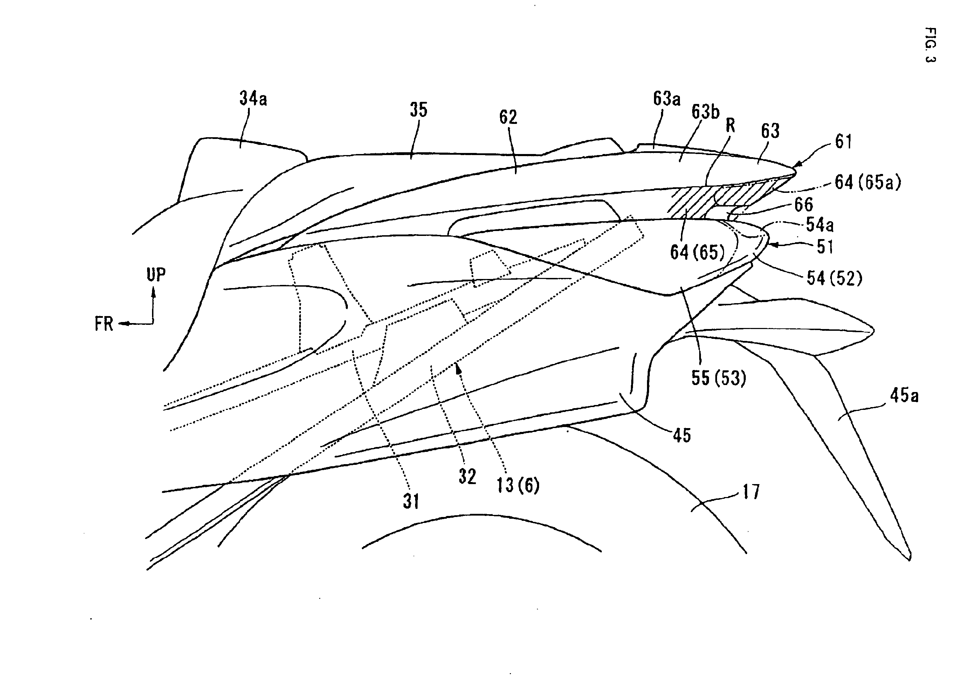

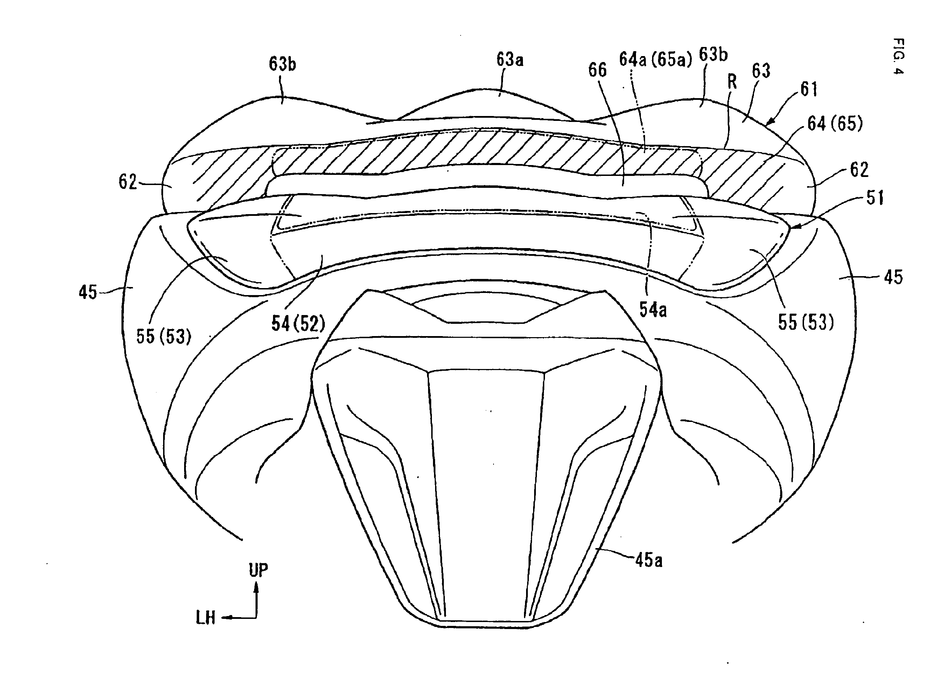

As shown in Figs. 3 and 4, a rear combination lamp 51 in which a tail lamp 52 and right and left rear indicators 53 are integrated is arranged between the rear ends of the right and left rear side covers 45.
In the rear combination lamp 51, the right and left rear indicators 53 are further integrated on both sides of the tail lamp 52 long sideways and located in the center in the direction of the width of the body. The tail lamp 52 functions as a tail lamp and a brake light. A lens 54 of the tail lamp 52 is extended sideways, and lenses 55 ranging both sides of the lens 54 of the right and left rear indicators 53 are extended diagonally forward and outside along both sides at the rear ends of the rear side covers 45. Each lens 54, 55 is protruded outside the body in a convex shape with a vertical intermediate part of a face of each lens as an apex in its cross section. A rear fender 45a is arranged on the downside of each rear end of the right and left rear side covers 45.

A rear grip 61 for the passenger to grip is arranged on the upside of each rear end of the right and left rear side covers 45 (on the upside of the rear combination lamp 51). The rear grip 61 is made of resin or aluminum die-casting for example and is arranged across the right and left rear side covers 45 immediately at the back of the rear seat 35. The rear grip 61 is connected and fixed to the seat frame 13 inside the rear side covers 45 by a bolt or others in a state in which its lower end is touched to a top face of the rear side cover 45 and a top face of the rear combination lamp 51.

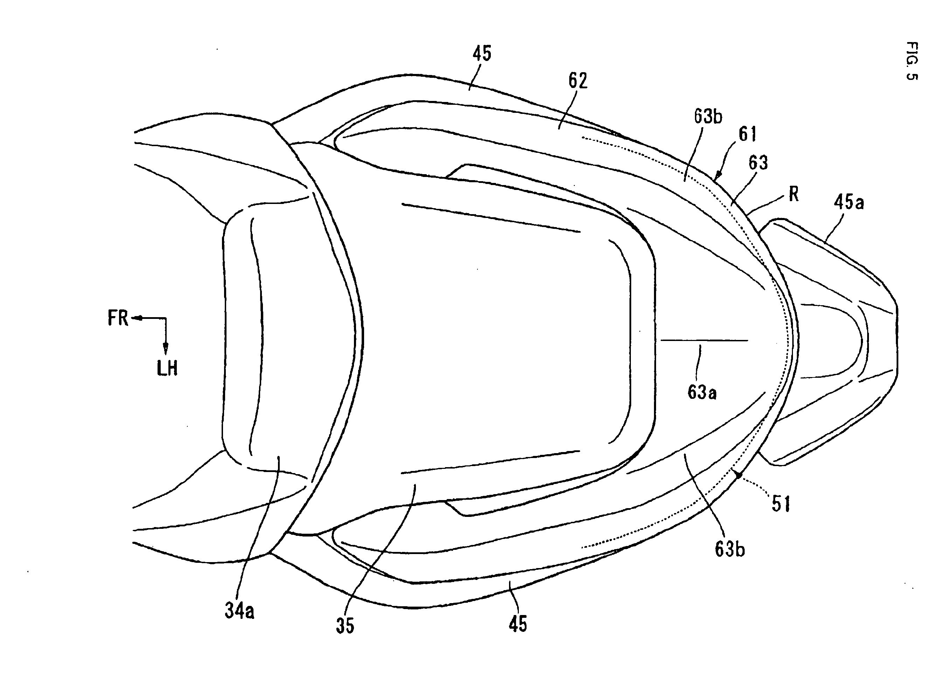

To explain also referring Fig. 5, side grips 62 are respectively integrally extended forward in the longitudinal direction of the vehicle from both sides of the rear grip 61. Both side grips 62 are extended in the longitudinal direction immediately on the sides of the rear seat 35, are arranged with both side grips slightly inclined in a top view so that distance between both side grips is increased on the front side, and are provided in a state in which both side grips are inclined with each front slightly lowered, reducing the vertical thickness of each front in a side view. Each front of both side grips 62 is connected and fixed to the seat frame 13 inside the rear side covers 45 by a bolt or others in a state in which each lower end is touched to the top face of the rear side cover 45. In an intermediate part in a longitudinal direction of each side grip 62, gripping space is formed between each side grip and the rear side cover 45 and between each side grip and the rear seat 35.

An upper surface 63 of the rear grip 61 is provided so that the upper surface substantially continues to a top face of the rear seat 35. A leading edge of the rear grip 61 is provided substantially in parallel with a trailing edge of the rear seat 35 sideways and a trailing edge of the rear grip 61 is curved in a convex shape backward with the lateral center as an apex. On the side of the upper surface 63 of the rear grip 61, gentle convex central and right and left projections 63a, 63b are formed on each upside of the lateral center and both sides, and when the pillion passenger puts his/her hand on the rear grip 61, the hand is put between each projection 63a, 63b to facilitate a grip.

An outside surface forming a part of the appearance of the vehicle of the rear grip 61 is mainly formed by the upper surface 63 and a lower surface 64 extended diagonally downward and inside from its outside edge. A ridge line (outside edges of the upper and lower surfaces 63, 64) R on which the upper and lower surfaces 63, 64 cross forms the periphery in a top view of the rear grip 61. In other words, the upper and lower surfaces 63, 64 are provided so that they reach the outside edge in the top view of the rear grip 61. The outside edge in the top view of the rear grip 61 is provided along the periphery in a top view of the rear combination lamp 51 outside it.

The lower surface 64 of the rear grip 61 is inclined so that an upper part is located closer to the outside edge and is formed in predetermined width over the whole lateral width of the rear grip 61. A part forming the lower surface 64 of the rear grip 61 will be described as a flat portion 65 below and actually, the lower surface 64 has a substantially flat curved face. That is, the flat portion 65 means a part forming a flat surface having predetermined area and having no irregularities and though it need scarcely be said that the flat portion is flat, the flat portion may be also polygonal or may also have difference in a level.

As for the lens 54 of the tail lamp 52 in the rear combination lamp 51, a part located over the apex (the vertical intermediate part) of the convex cross section functions as an upper lens 54a that can also distribute bulb light of the tail lamp 52 upward.
The rear of the rear grip 61 overhangs backward above the upper lens 54a. That is, the upper lens 54a and the rear of the rear grip 61 are provided so that they are overlapped in a top view, in other words, they are vertically opposite. Hereby, the lower surface 64 inclined so that the rear is higher of the rear grip 61 is located above the upper lens 54a.

An inside area (an area opposite to the upper lens 54a) in the direction of the width of the body in the lower surface 64 functions as a reflection plane 64a that can reflect light of the tail lamp 52 distributed upward by the upper lens 54a at the back of the vehicle because coating, plating or mirror finish is applied to the area. Hereby, the light of the tail lamp 52 is directly distributed from the lens 54 and is reflected (distributed) on the lower surface 64 of the rear grip 61 toward the back of the vehicle. In other words, a predetermined range in the flat portion 65 functions as a reflecting part 65a forming the reflection plane 64a that reflects light from the tail lamp 52 toward the back of the vehicle.

A grooved concave portion (a backward reflection inhibiting part) 66 having predetermined depth is formed in a part (a part close to the upper lens 54a) close to the rear combination lamp 51 in the flat portion 65. The concave portion 66 is extended sideways at least by the lateral width of the upper lens 54a and the section of a part between the lower end facing the top face of the lens of the rear grip 61 and the ridge line of the lower surface 64 is made concave in a shape of an arc. The concave portion 66 prevents from bulb light from the upper lens 54a from being reflected backward (in other words, inhibits the backward reflection of bulb light from the upper lens 54a). Hereby, when the vehicle body rear portion is viewed from behind, the emission by the lens 54 of the tail lamp 52 and the emission by reflection on the lower surface 64 of the rear grip 61 are vertically separated.

The concave portion 66 also functions as a part for putting fingers of a hand put on the rear grip 61. That is, when the pillion passenger grips the rear grip 61 in a state in which he/she puts his/her hand on the rear grip 61, the tip of his/her finger is put in the concave portion 66 and the performance of the rear grip 61 as a grip is further enhanced. As the upper surface 63 of the rear grip 61 and the top face of the rear seat 35 substantially continue, a luggage put on the rear seat 35 and the rear grip 61 is easily stabilized.

As described above, the vehicle body rear structure in the above-mentioned embodiment is applied to the motorcycle 1 provided with the tail lamp 52 provided to the vehicle body rear portion and the rear grip 61 provided over the tail lamp 52, the rear grip 61 is provided with the flat portion 65 continuous on the lower surface 64, and the reflecting part 65a that is opposite to the tail lamp 52 and reflects light from the tail lamp 52 backward is provided to the flat portion 65.

According to this configuration, light reflected backward by the reflecting part 65a over the tail lamp 52 functions like light distribution by a high mounted stop lamp, the visibility of the tail lamp 52 is further enhanced, a high mounted stop lamp is not required to be separately provided, and the cost of the vehicle body rear portion can be reduced.

Besides, in the vehicle body rear structure, the concave portion 66 is arranged between the tail lamp 52 and the reflecting part 65a by providing the concave portion 66 for inhibiting the backward reflection of light of the tail lamp 52 to the part close to the tail lamp 52 of the rear grip 61, direct light from the tail lamp 52 and reflected light from the reflecting part 65a are separated, and the visibility can be more enhanced.

The invention is not limited to the above-mentioned embodiment and for example, the rear grip 61 may be also provided with a function as a rear carrier or may be also integrated with a rear carrier. For an inhibitor of the backward reflection of bulb light from the upper lens 54a, a convex portion may be also provided in place of the concave portion 66 and reflection itself may be also inhibited by grain, knurling or delustering.
The configuration in the above-mentioned embodiment is one example of the invention, it need scarcely be said that the configuration can be also applied to a three-wheeled or four-wheel vehicle or a scooter-type vehicle and that various changes are allowed in a range which does not deviate from the object of the invention.
1...Motorcycle (Saddle-ride type vehicle)
52...Tail lamp
61...Rear grip
64...Lower surface
65...Flat portion
65a...Reflecting part
66...Concave portion (Backward reflection inhibiting part)

## Claims

1. A vehicle body rear structure of a saddle-ride type vehicle (1) comprising a tail lamp (52) provided to the vehicle body rear portion and a rear grip (61) provided over the tail lamp (52), **characterised in that** the rear grip (61) includes a flat portion (65) continuous on its lower surface (64); and
the flat portion (65) includes a reflecting part (65a) opposite to the tail lamp (52) for reflecting light from the tail lamp (52) backward.

2. The vehicle body rear structure of a saddle-ride type vehicle (1) according to Claim 1,
wherein a part close to the tail lamp (52) of the rear grip (61) includes a backward reflection inhibiting part (66) for inhibiting the backward reflection of light of the tail lamp (52).

## Patentansprüche

1. Karosserie-Heckkonstruktion eines Fahrzeugs (1) mit einem Sattel, welche ein Rücklicht (52), welches an dem hinteren Abschnitt der Fahrzeugkarosserie vorgesehen ist, und einen hinteren Griff (61) umfasst, welcher über dem Rücklicht (52) vorgesehen ist,
**dadurch gekennzeichnet, dass**
der hintere Griff (61) einen ebenen Abschnitt (65) fortlaufend auf seiner unteren Oberfläche (64) enthält; und
der ebene Abschnitt (65) ein reflektierendes Teil (65a) gegenüberliegend dem Rücklicht (52) zum Reflektieren von Licht von dem Rücklicht (52) nach hinten enthält.

2. Karosserie-Heckkonstruktion eines Fahrzeugs (1) mit einem Sattel gemäß Anspruch 1,
wobei ein Teil nahe dem Rücklicht (52) des hinteren Griffs (61) ein Rückwärtsreflektion-Verhinderungsteil (66) zum Verhindern der Rückwärtsreflektion von Licht von dem Rücklicht (52) enthält.

## Revendications

1. Structure arrière de carrosserie de véhicule d'un véhicule du type à selle (1) comprenant un feu arrière (52) prévu sur la partie arrière de carrosserie de véhicule et un élément de préhension arrière (61) prévu au-dessus du feu arrière (52), **caractérisée en ce que**
l'élément de préhension arrière (61) comprend une partie plate (65) continue sur sa surface inférieure (64) ; et
la partie plate (65) comprend une partie réfléchissante (65a) face au feu arrière (52) pour réfléchir la lumière provenant du feu arrière (52) vers l'arrière.

2. Structure arrière de carrosserie de véhicule d'un véhicule du type à selle (1) selon la revendication 1,
dans laquelle une partie à proximité du feu arrière (52) de l'élément de préhension arrière (61) comprend une partie d'inhibition de réflexion vers l'arrière (66) pour empêcher la réflexion vers l'arrière de la lumière du feu arrière (52).
